# EUROPEAN PATENT APPLICATION

(11) **EP 0 646 344 A1**
(43) Date of publication of application: **05.04.1995**
(21) Application number: 94307122.5
(22) Date of filing: 29.09.1994
(51) Int. Cl.: A47J 37/08, A47J 37/06

(54) **Sandwich toaster**

(30) Priority: 05.10.1993 AU PM1633/93
(71) Applicant: BREVILLE PTY LTD., Pyrmont, New South Wales 2009 (AU)
(72) Inventor: McClean, Stephen John, New South Wales, 2209 (AU)
(74) Representative: Tribe, Thomas Geoffrey

(57) **Abstract**

A sandwich toaster characterised in that air entry (23,29) and exit (25,28) apertures are provided in lower (10) and upper (11) die mould halves respectively in relation to mould members (14,15,26) within the die mould halves so that a flow of air over the mould members is produced serving to limit the temperature reached within the toaster to a predetermined level when electric energy is supplied to heater elements in the sandwich toaster in the absence of a food product.

## Description

The present invention relates to toasters for sandwiches or like food products. Sandwich toasters conventionally consist of a pair of die mould-halves that when brought together define a cavity, each of the die mould-halves having in it an electrical heater element, the arrangement being such that a sandwich or other food product to be toasted or grilled can be placed in a lower die mould-half and an upper die mould-half brought down on top of it by hinging it downwardly in relation to the lower die mould-half, heat generated by the electric heater elements acting to toast or grill surfaces of the food product.

It has been found essential to include a thermostatic control in sandwich toasters to limit the temperature reached in operation. In the absence of a thermostatic control there is a danger that the toaster will destructively overheat if left with the electrical supply switched on in the absence of a food product to be toasted. While thermostatic controls effectively prevent this, they have the disadvantage of making it most undesirable to immerse the toaster in water for cleaning purposes and as a consequence difficulties are experienced in keeping sandwich toasters clean.

An object of the present invention is to provide a sandwich toaster, the construction of which is such that temperature is automatically limited when the toaster is switched on without a sandwich in it, without the necessity for including a thermostatic control.

A further object of the present invention is to provide a sandwich toaster in which the upper surface of a sandwich being toasted is visible through the top of the toaster. This object has, in the past, been achieved by the provision of a glass plate in the upper half of the toaster. Such a construction, while effective, is expensive. The construction provided by the present invention, however, is simple and relatively inexpensive.

A still further object of the invention is to provide a sandwich toaster in which an electrical input is provided to one half of the toaster and is transmitted to the other half through separable hinges connecting the two halves, without the usual cable connection between the two. Such an arrangement enables the two halves of the toaster to be separated so that both may be readily cleaned, for example by placing them in a dishwasher.

The present invention consists in a sandwich toaster consisting of a pair of hingedly connected upper and lower die mould-halves, having within them mould members that, when brought together define a cavity, each of the die mould-halves having in it an electrical heater element arranged to heat the mould member, the arrangement being such that a sandwich or other food product to be toasted or grilled can be placed in the mould member of the lower die mould-half and the mould member of the upper die mould-half brought down on top of it, heat generated by the electric heater elements acting to toast or grill surfaces of the food product, characterised in that means defining air entry and exit apertures are provided in the lower and upper die mould-halves respectively in relation to each mould member such that a flow or air over the mould member is produced serving to limit the temperature reached within the toaster to a predetermined level when electrical energy is supplied to the heater elements in the absence of a food product.

In order that the nature of the invention may be better understood and put into practice, a preferred embodiment thereof is hereinafter described by way of example with reference to the accompany drawings, in which:
Figure 1 is a perspective view of a sandwich toaster according to the invention in the closed position;

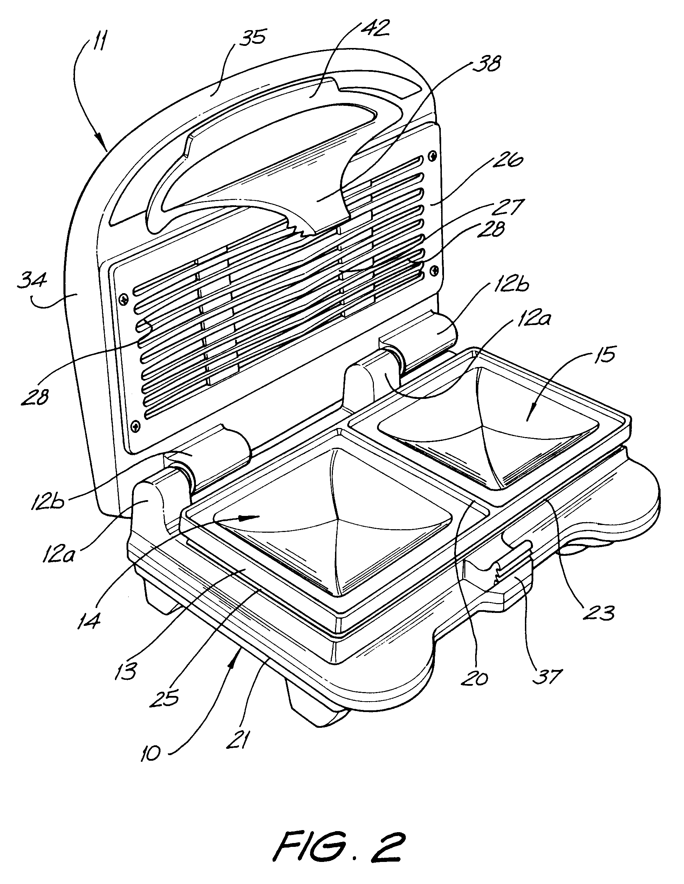

Figure 2 is a perspective view of the sandwich toaster of Figure 1 in the open position;
Figure 3 is a view similar to Figure 2 illustrating the manner in which the two parts of the sandwich toaster can be separated;
Figure 4 is a side elevation of the sandwich toaster;

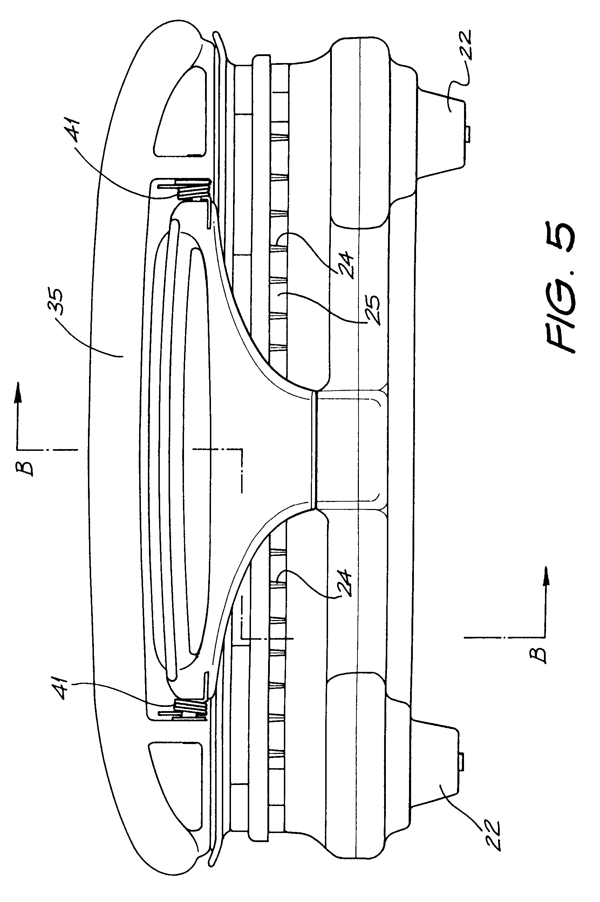

Figure 5 is a front elevation;
Figure 6 is a section on line B-B of Figure 5;

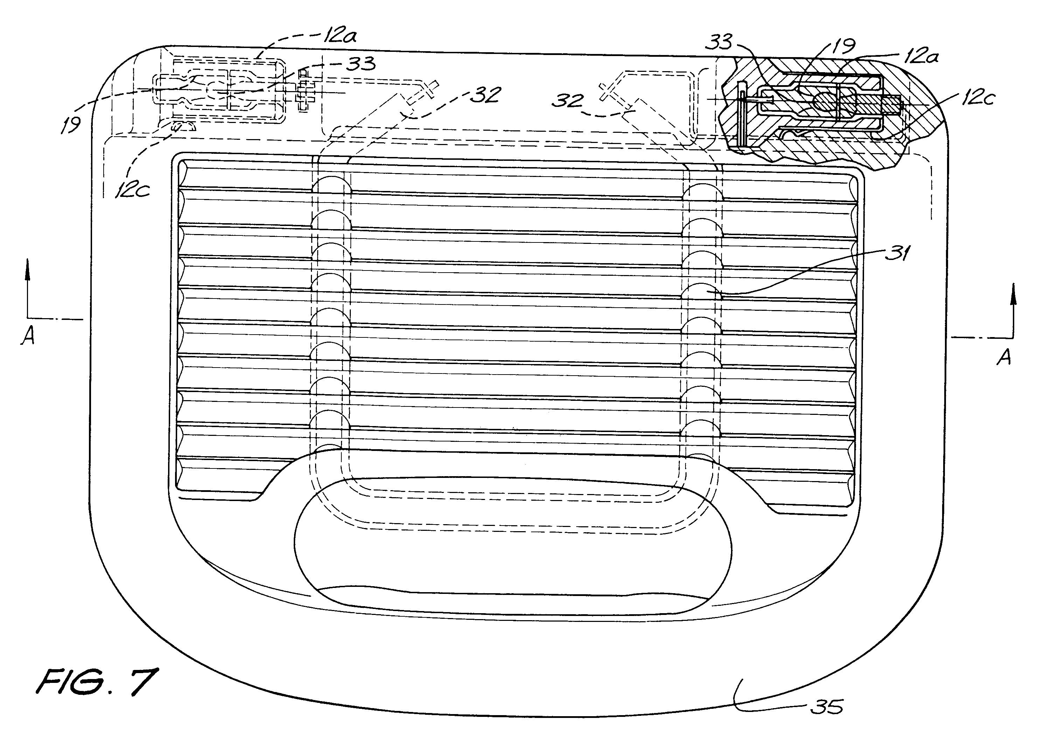

Figure 7 is a part-sectional plan view from above;

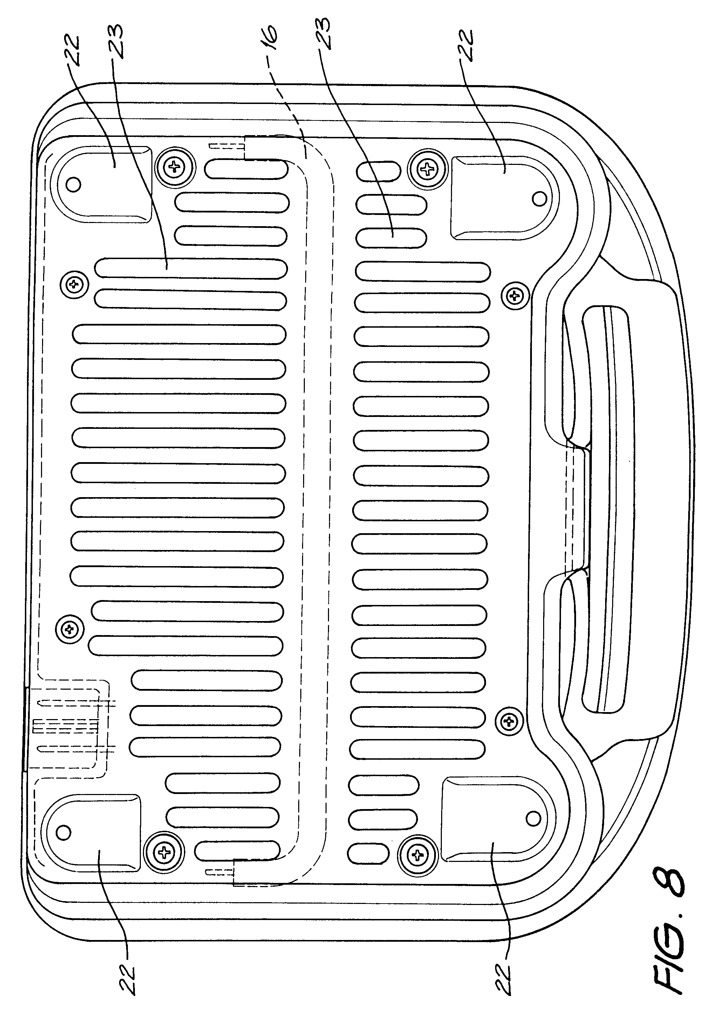

Figure 8 is a plan view from below;

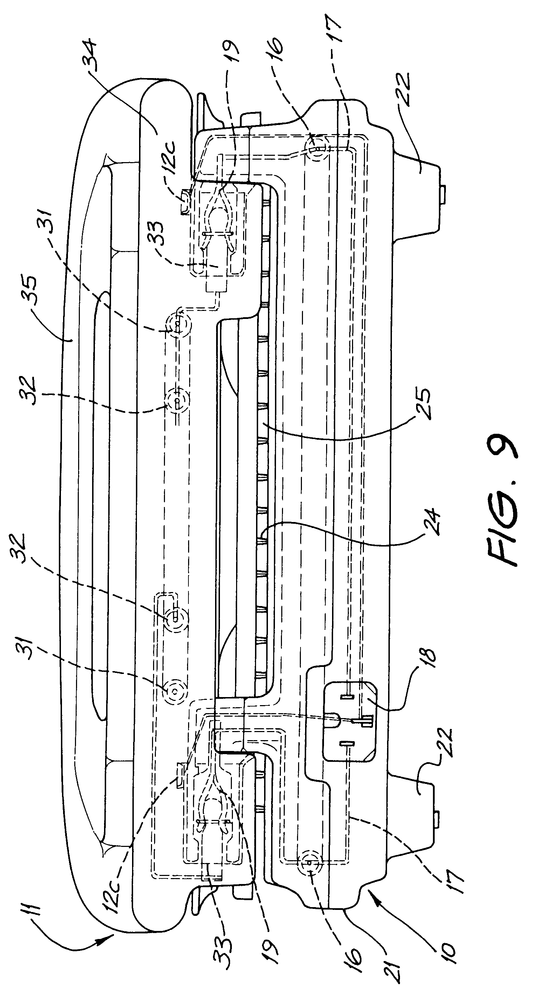

Figure 9 is a rear elevation; and

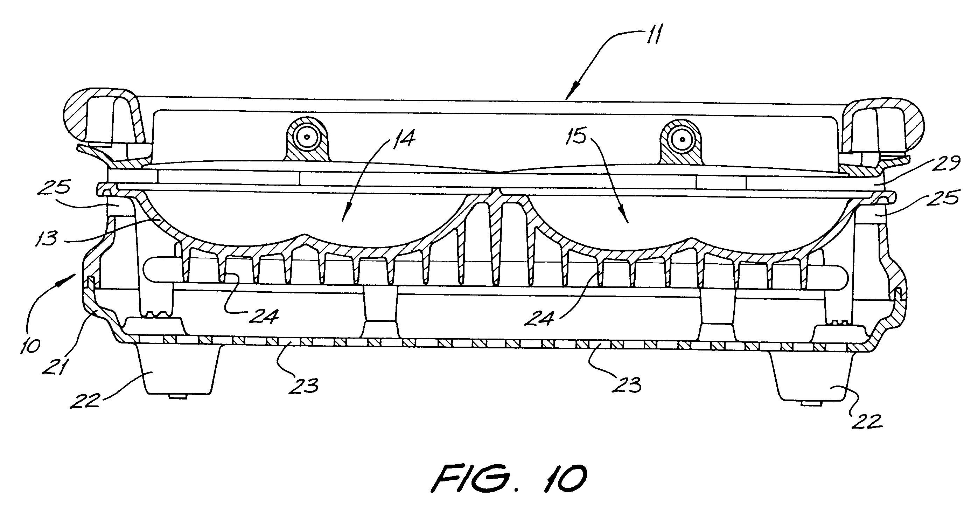

Figure 10 is a sectional view on line A-A of Figure 7.

The sandwich toaster illustrated in the drawings consists in a lower mould half 10 and an upper mould half 11, which are connected by means of hinge parts 12a and 12b.

The lower mould half includes a mould member 13 made of highly conductive material, such as cast aluminium. This is heated by means of an electric heater element 16, the ends of which are connected electrically by means of wires 17 to the electrical socket 18 arranged in the back of the casing 21 of the lower mould half 10. They are also connected to the connectors 19 arranged within the hinge parts 12a.

The mould member 13 is contained within an outer plastic casing 21 supported on feet 22. The lower surface of the casing 21 has in it a series of slots 23 through which air enters the casing and flows over ribs 24 formed on the lower surface of the mould member 13. Air leaves the casing 21 through a gap 25 between the casing 21 and the mould member 13.

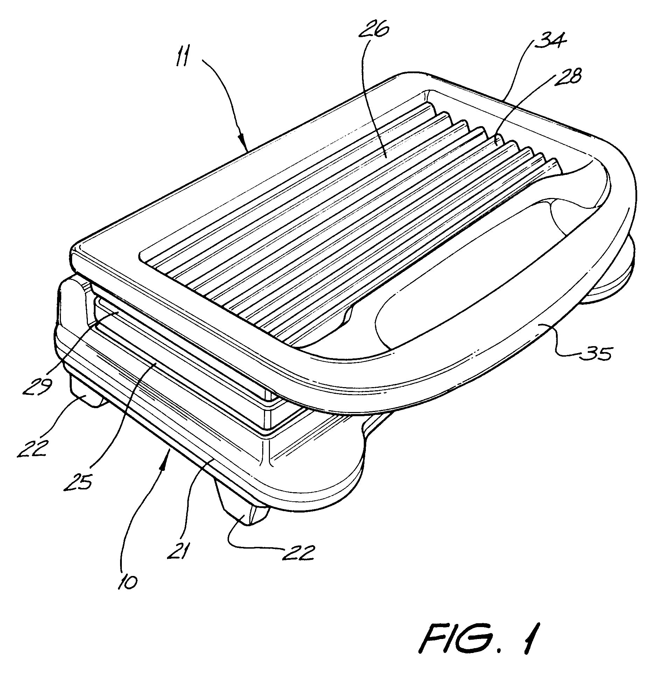

Upper mould half 11 includes a mould member 26 made of highly conductive material such as aluminium set in a plastic surround 34. The mould member 26 is flat apart from a slightly convex portion 27 at the centre corresponding to the rib 20 of the mould member 13. This is to give the upper surface of toasted sandwiches an attractive appearance. A series of slots 28 is formed in the member 26 to permit the flow of air through the member 26 when there are no sandwiches in the toaster. Air enters through the gap 29 between the mould member 13 and the mould member 26. The mould member 26 is heated by an electric heating element 31, the ends 32 of which are connected electrically to connectors 33 within the hinges 12. When the toaster is closed, that is to say in the position shown in Figure 1 and there are no sandwiches in the toaster, air enters the gap 29 and passes out through the slots 28 in the mould member 26.

The purpose of this arrangement is to protect the toaster from destructive overheating in the event that it is left with the electrical supply connected but without the presence of sandwiches being toasted. The slots 28 also perform an additional function in that they are arranged in such a manner that the upper surfaces of sandwiches being toasted can be seen through the top of the toaster.

In the design of a particular sandwich toaster the wattage of the heating elements and the arrangements of slots and gaps 25 and 29 is so chosen that if the toaster is left switched on without sandwiches in it the air flow around the mould members 13 and 26 is such as to cause the members to reach a stable temperature below a destructively high temperature. When sandwiches are included in the sandwich toaster the flow of air through the slots 28 and 29 will be blocked off. However, if under these circumstances, sandwiches are left in the toaster for an excessive time experiments have shown that they will char and shrink thus unblocking the slots 28 and 29 allowing air to flow to restrict the temperature attained by the toaster. During toasting there will be a flow of air past the ribs 24 on the lower surface of the mould member 13 and out through the gap 25. While this will result in some loss of heat to the member 13 experiments have shown that this is acceptable.

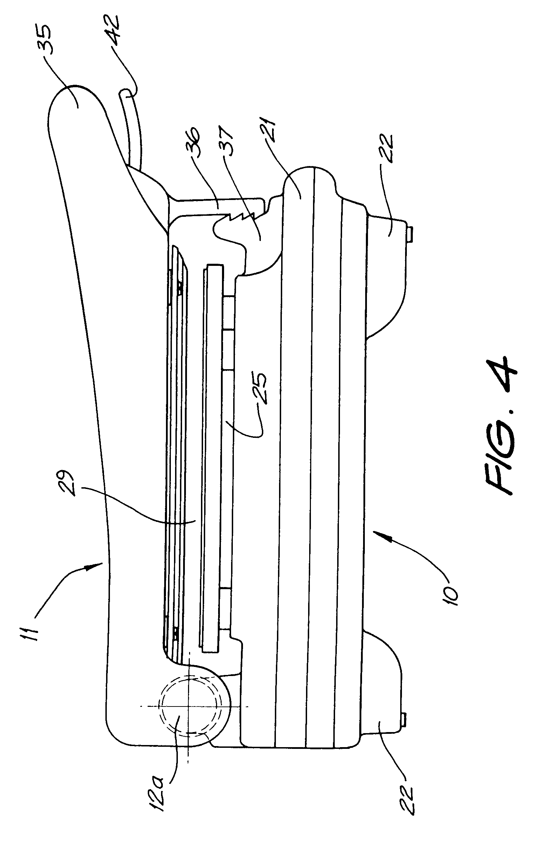

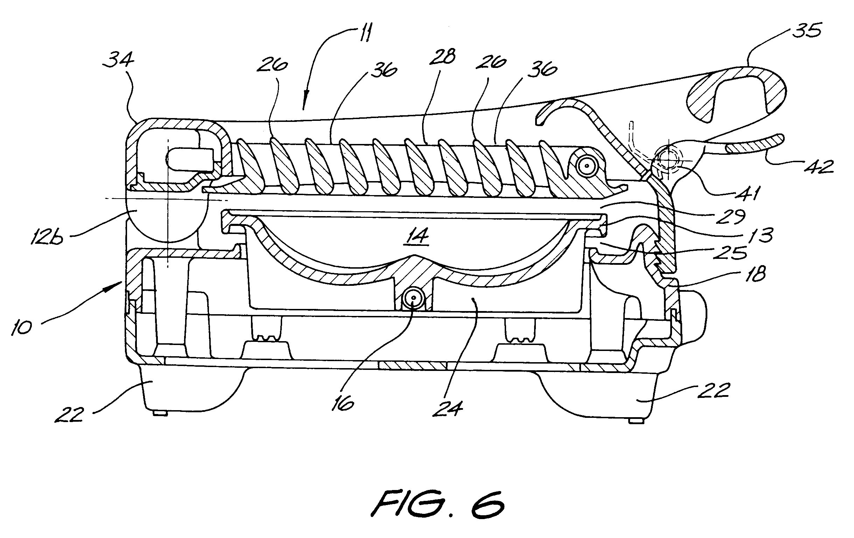

The casing 11 is provided with a handle 35 and a locking mechanism consisting of toothed members 36 and 37 which interengage as shown in Figure 4. The member 36 is pivotably mounted and spring loaded by the spring 41 (Figure 6) and may be released from the locked position by means of the tongue 42.

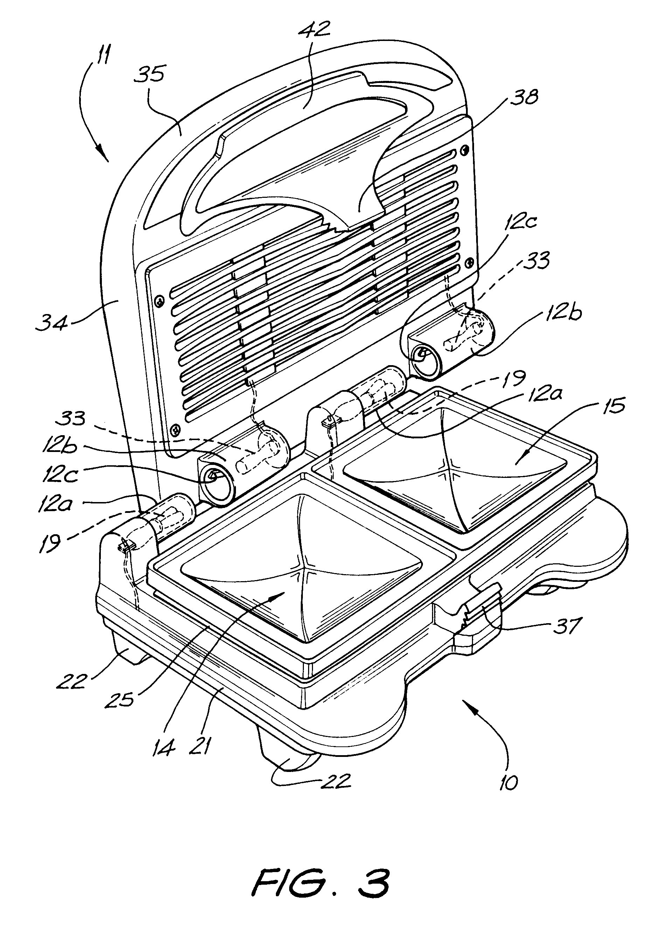

As is shown in Figure 3, each hinge consists of a first part 12a attached to the lower mould-half 10 and a part 12b attached to the upper mould-half 11. The parts 12a consist of a cylinder of insulation material surrounded by a metal sheath surrounding the connector 19 which is in the form of a spring socket. The part 12b consists of a cylinder fitting closely but slidingly over the parts 12a and enclosing the pin connectors 33; the parts of the toaster are shown disconnected in Figure 3.

If in this position, the upper mould-half 11 is moved to the left as seen in the drawing, the parts 12a enter the parts 12b and pin connector 33 in each case enters socket connector 19, thus making an electrical connection between the heater member 32 in the upper mould-half 11 and the socket 18 in the lower mould-half 10. Within each part 12b is a metal earthing contact 12c connected to the metal parts of the upper mould half 11. When the parts 12b are slid over the metal outer sheath of the parts 12a contact is made between the earthing contacts 12c and the outer metal sheaths of the parts 12a, the sheaths being connected to the earth pin of the socket 18. The earthing contacts 12c are arranged so that they may contact with the metal sheaths before the contacts 19 and 33 meet, thus ensuring proper earthing of the metal parts of upper mould half 11. The mould-halves are separated by relative movement in the opposite direction. When separated, each may readily be placed in a dishwasher for comprehensive washing. Full immersion of each part is possible because neither contains a thermostat and all other parts of the toaster are submersible.

It will be appreciated by persons skilled in the art that numerous variations and/or modifications may be made to the invention as shown in the specific embodiments without departing from the spirit or scope of the invention as broadly described. The present embodiments are, therefore, to be considered in all respects as illustrative and not restrictive.

## Claims

1. A sandwich toaster consisting of a pair of hingedly connected upper (11) and lower (10) die mould-halves, having within them mould members (14,15,26) that, when brought together define a cavity, each of the die mould-halves having in it an electrical heater element (16,36) arranged to heat the mould member, the arrangement being such that a sandwich or other food product to be toasted or grilled can be placed in the mould member (14,15) of the lower die mould-half (10) and the mould member (26) of the upper die mould-half (11) brought down on top of it, heat generated by the electric heater elements (16,36) acting to toast or grill surfaces of the food product, characterised in that means defining air entry (23,29) and exit (25,28) apertures are provided in the lower and upper die mould-halves respectively in relation to each mould member (14,15,26) such that a flow or air over the mould member is produced serving to limit the temperature reached within the toaster to a predetermined level when electrical energy is supplied to the heater elements in the absence of a food product.

2. A sandwich toaster as claimed in claim 1 wherein the means defining air exit apertures in the upper die mould half consists of ribs separated by slots (28) a part at least of the upper surface of a food product within the toaster being visible through said slots (28).

3. A sandwich toaster as claimed in claim 1 or claim 2 wherein the electrical heater elements (16,36) in the die mould halves are interconnected electrically only through connections within hinges (12) joining the said die mould halves (10,11).

4. A sandwich toaster as claimed in claim 1 or claim 2 wherein the electrical heater elements (16,36) in the die mould halves (10,11) are interconnected electrically only through connections (19,33) within hinges (12) joining the said die mould halves (10,11), each said hinge (12) consisting of a part (12a) attached to one said die mould half and a part (12b) attached to the other said die mould half, the die mould halves (10,11) being separable by relative movement between said parts.

5. A sandwich toaster as claimed in claim 1 wherein the lower die mould half (10) consists of an outer casing (21) surrounding the mould member (14,15), air entry apertures (23) being formed in a lower face of the outer casing (21) and air exit apertures being formed by a peripheral gap around the mould member (14,15) between the mould member (14,15) and the outer casing (21).

6. A sandwich toaster as claimed in claim 1 or claim 5 wherein the upper mould member (11) consists of a plastic surround (34) within which the mould member (26) is located, the air exit apertures consisting of a series of slots (28) formed in the mould member (26) and the air entry apertures are constituted by a gap (29) between the mould members (14,15,26).
